# EUROPÄISCHE PATENTSCHRIFT

(11) **EP 2 411 205 B1**
(45) Veröffentlichungstag und Bekanntmachung des Hinweises auf die Patenterteilung: **10.09.2014**
(21) Anmeldenummer: 10708534.2
(22) Anmeldetag: 12.03.2010
(51) Int. Cl.: B29C 70/38

(54) **ANDRUCKVORRICHTUNG UND ANDRUCK- UND ABLEGESYSTEM ZUM ABLEGEN VON EINEM FASERBAND AUF EINE DOPPELT GEKRÜMMTE FLÄCHE, SOWIE VERWENDUNG UND VERFAHREN**
PRESSING APPARATUS AND PRESSING AND DEPOSITING SYSTEM FOR DEPOSITING A SLIVER ON A DOUBLE CURVED SURFACE, AND USE AND METHOD
DISPOSITIF DE PRESSION ET SYSTÈME DE PRESSION ET DE DÉPÔT POUR LE DÉPÔT D'UN RUBAN DE FIBRES SUR UNE SURFACE INCURVÉE DOUBLÉE, UTILISATION ET PROCÉDÉ CORRESPONDANTS

(30) Priorität: 23.03.2009 DE 102009014488; 23.03.2009 US 162540 P
(43) Veröffentlichungstag der Anmeldung: 01.02.2012
(73) Patentinhaber: Airbus Operations GmbH, 21129 Hamburg (DE)
(72) Erfinder: GENSSEN, Marcel, 08525 Plauen (DE)
(74) Vertreter: Maiwald Patentanwalts GmbH
(86) Internationale Anmeldenummer: PCT/EP2010/053158
(87) Internationale Veröffentlichungsnummer: WO 2010/108792

(56) Entgegenhaltungen:
- EP-A1- 1 293 338
- FR-A1- 2 539 122
- US-A- 4 750 965
- US-A- 5 011 563
- US-A1- 2008 000 576

## Beschreibung

### GEBIET DER ERFINDUNG

Die Erfindung betrifft das Ablegen von Faserbändern auf Flächen. Insbesondere betrifft die Erfindung eine Andruckvorrichtung zum Ablegen eines Faserbandes auf eine Fläche. Ferner betrifft die Erfindung ein Andruck- und Ablegesystem zum Ablegen eines Faserbandes auf eine Fläche, die Verwendung einer Andruckvorrichtung zum Ablegen eines Faserbandes auf ein Schalensegment eines Luftfahrzeugrumpfes und ein Verfahren zum Ablegen eines Faserbandes auf eine Fläche.

### HINTERGRUND DER ERFINDUNG

Andruckrollen werden verwendet, um beispielsweise vorimprägnierte Faserbänder auf ebene Oberflächen bzw. Werkzeuge abzulegen.

Die EP 0 441 114 A beschreibt einen Mechanismus mit zwei Rollen, die von einem elastischen Faserband bedeckt sind und vorzugsweise als Fixierrollen in einer Kopiermaschine verwendbar sind.

Aus der WO 98/42991 ist ein Mechanismus mit einem drehenden Lager bekannt, das von einem elastischen Faserband bedeckt ist.

Die DE 0 625 735 A1 zeigt eine elastische Befestigungsrolle fiir Kopier- und Druckmaschinen, wobei die Rolle einen elastischen Kem und eine definierte Überzugschicht umfasst.

Aus der DE 10 2006 058 584 A1 und der US 2008/0093026 A1 ist eine Vorrichtung zum Anpressen eines Tapes auf eine Oberflächenkontur für ein Fibre/Tow-Placement-Verfahren bekannt.

Die FR 2 539 122 A1 betrifft eine Vorrichtung zum Bedecken einer Fläche mit einem Kompositmaterial aus Fasern und Harz. Rollen der Vorrichtung sind mit Federn in Öffnungen einer gemeinsamen Achse gelagert.

Die US 5 011 563 A betrifft eine automatische Bandbefestigungsvorrichtung, bei der Rollelemente über Federn an einer gemeinsamen Achse abgestützt sind. Die Führung der Rollelemente und der Federn erfolgt über eine Stange.

Die US 4 750 965 A betrifft einen Bandablegekopf, bei dem Rollen über Federn an einer gemeinsamen Achse abgestützt sind und die Führung über eine Stange durch ein Loch in der Achse erfolgt.

### ZUSAMMENFASSUNF DER ERFINDUNG

Es kann als Aufgabe der Erfindung angesehen werden, eine einfache und flexible Vorrichtung zum Ablegen von Bändern auf unebene Oberflächen anzugeben.

Es ist eine Andruckvorrichtung zum Ablegen eines Faserbandesauf eine Fläche, ein Andruck- und Ablegesystem zum Ablegen eines Faserbandes auf eine Fläche sowie die Verwendung der Andruckvorrichtung zum Ablegen eines Faserbandes auf ein Schalensegment eines Luftfahrzeugrumpfes und ein Verfahren zum Ablegen eines Faserbandes auf eine Fläche gemäß den Merkmalen der unabhängigen Ansprüche angegeben. Weiterbildungen der Erfindung werden durch die abhängigen Ansprüche verkörpert.

Gemäß einem Ausführungsbeispiel der Erfindung ist eine Andruckvorrichtung zum Ablegen eines Faserbandes auf eine Fläche mit einem ersten Segment und zumindest einem zweiten Segment, jeweils zum Rollen entlang der Fläche, und mit einem Baugruppenrahmen zum Halten der Segmente angegeben. Das erste Segment weist ein erstes Rollelement sowie eine Aufhängungsvorrichtung auf, das zweite Segment weist ein zweites Rollelement auf. Die Aufhängungsvorrichtung ist zum Anbringen des ersten Segments an dem Baugruppenrahmen und zum drehbaren Lagern des ersten Rollelements an dem Baugruppenrahmen ausgeführt. Die Aufhängungsvorrichtung ist zum Ermöglichen einer Relativbewegung zwischen dem ersten Rollelement und dem zweiten Rollelement in einer radialen Richtung des ersten Rollelements ausgeführt.

Die Andruckvorrichtung weist den Vorteil auf, dass sie zum Ablegen eines Faserbandes, beispielsweise mit einer Hochleistungsthermoplastmatrix auf eine Fläche abgelegt werden kann, und dabei die Andruckvorrichtung Temperaturen von über 420°C aushalten kann, ohne dass Struktur und Eigenschaften der Andruckvorrichtung signifikant verändert werden. Ein Erhitzen des mit Matrix vorimprägnierten Faserbandes auf eine Temperatur von über 420° ist beispielsweise beim Aufschmelzen von Hochleistungsthermoplastmatrizen notwendig, damit diese sich mit der Fläche bzw. bereits abgelegten Material- zu einem Verbundwerkstoff verbinden können. Dadurch kann beispielsweise bei einer Fläche von Rumpfschalen oder Flügelschalen eines Luftfahrzeugs durch die Verbindung mit der Hochleistungsthermoplastmatrix eine sehr hohe Schlagfestigkeit der Rumpfschalen bzw. Flugschalen erreicht werden, so dass beispielsweise Materialeinsparungen der Rumpfschale bzw. der Flügelschale realisiert werden können.

Ferner weist eine derartige Andruckvorrichtung den Vorteil auf, dass nur eine Rolle verwendet werden muss, um beilspielsweise eine komplex geformte Fläche bzw. doppelt gekrümmte Fläche mit einem Faserband zu beschichten. Dabei kann das Faserband, das als vorimprägnierter Hochleistungsthermoplast ausführbar ist, auf die Fläche aufgeschmolzen werden und somit rutschfest auf die Fläche angebracht werden.

Eine derartige Andruckvorrichtung ermöglicht es, dass ein automatisches Ablegen eines Hochleistungsthermoplastfaserbandes einfach und schnell möglich ist. Die Andruckvorrichtung ist dabei einfach zu installieren und einfach zu reparieren.

Ferner ermöglicht eine derartige Andruckvorrichtung mit einer Aufhängungsvorrichtung ein drehbares und translatorisches Lagern des ersten Rollelements an dem Baugruppenrahmen. Dadurch ist das erste Rollelement im Verhältnis zu einem zweiten Rollelement bei der Andruckvorrichtung beweglich angeordnet.

Eine derartige flexible Andruckvorrichtung weist den Vorteil auf, dass ein Faserband automatisch auf Flächen unterschiedlicher Geometrie, beispielsweise auf eine doppelt gekrümmte Oberfläche eines Werkzeugs oder einer Flugzeugrumpfschale, aufgelegt werden kann, und somit Verbundwerkstoffe, beispielsweise mit doppelt gekrümmten Oberflächen, herstellbar sind.

Durch eine derartige Andruckvorrichtung können Verbundwerkstoffe mit gekrümmten Oberflächen beispielsweise für Industrien der Luftfahrt, des Schiffbaus, des Verkehrswesens, der Raumfahrt, der Bauindustrie, für Fahrzeugdächer, Hauben. Rumpfschalen, Flügelschalen, etc. hergestellt werden.

Die Andruckvorrichtung weist den Vorteil auf, dass beispielsweise ein vorimprägniertes thermoplastisches Faserband mit einem Rollelement automatisch auf eine doppelt gekrümmte Fläche ablegbar ist, und dass die Andruckvorrichtung bei einer Erhitzung des Faserbandes auf eine Verarbeitungstemperatur von über 420°C ihre Struktur und physikalischen Eigenschaften, die sie bei Zimmertemperatur aufweist, im Wesentlichen beibehält.

Eine derartige Andruckvorrichtung ist zur automatischen bzw. manuellen Ablage von thermoplastischen, hochleistungsthermoplastischen und duroplastischen Faserbändern bzw. vorimprägnierten Faserbändern auf eine Fläche geeignet.

Die Andruckvorrichtung für die automatische Ablage eines Faserbandes auf eine Fläche weist folgende Vorteile auf: Verbundwerkstoffe können in ähnlicher Qualität reproduziert werden; die automatische Ablage des Faserbandes auf die Fläche kann schneller sein als die manuelle Ablage; es können Kosteneinsparungen durch den geringeren Bedarf an Arbeitskräften im Vergleich zum manuellen Ablageverfahren realisiert werden. Im Gegensatz zur manuellen Fertigung kann eine Online-Kontrolle durch geeignete Bilderfassungssysteme installiert werden.

Die Rollelemente der Segmente der Andruckvorrichtung können als Rollelemente mit einer Aussparung in der Mitte der Rollelemente oder als massive Rollelemente ohne Aussparung ausgeführt sein.

Gemäß einem Ausführungsbeispiel der Erfindung weist die Aufhängungsvorrichtung eine (insbesondere mechanische) Federanordnung auf, wodurch eine Relativbewegung zwischen dem ersten Rollelement und dem zweiten Rollelement in einer radialen Richtung des ersten Rollelements durch Komprimieren oder Ausdehnen der Federanordnung bzw. von Federn der Federanordnung ermöglicht wird. Die Federanordnung kann eine oder mehrere Federn aufweisen. Unter einer mechanischen Feder bzw. Federanordnung kann hierbei ein elastischer Festkörper wie etwa eine oder mehrere Schraubenfedern, Blattfedern, Tellerfedern oder ähnliches verstanden werden.

Im Gegensatz zu pneumatischen oder hydraulischen Federn kann eine mechanische Feder bzw. Federanordnung derart gestaltet werden, dass sie in einem großen Temperaturbereich einsetzbar ist, beispielsweise in einem Bereich bis 420 °C, ohne dass sich ihre mechanischen Eigenschaften wesentlich ändern. Auf diese Weise kann auf eine Kühlung für die Aufhängungsvorrichtung oder andere Mittel zur Kompensierung der Temperaturschwankungen verzichtet werden.

Gemäß einem Ausführungsbeispiel der Erfindung ist die Aufhängungsvorrichtung des ersten Segments eine erste Aufhängungsvorrichtung mit einer ersten Federanordnung, wobei das zweite Segment eine zweite Aufhängungsvorrichtung aufweist, die zum Anbringen des zweiten Segments an dem Baugruppenrahmen und zum drehbaren Lagern des zweiten Rollelements an dem Baugruppenrahmen ausgeführt ist. Die Andruckvorrichtung kann eine Mehrzahl von baugleichen Segmenten mit baugleichen Aufhängungsvorrichtungen aufweisen.

Gemäß einem Ausführungsbeispiel der Erfindung wird eine Relativbewegung zwischen dem ersten Rollelement und dem Baugruppenrahmen in einer radialen Richtung des ersten Rollelements durch Komprimieren oder Ausdehnen der (ersten) Federanordnung ermöglicht.

Gemäß einem Ausführungsbeispiel der Erfindung weist die zweite Aufhänbungsvorrichtung eine zweite (insbesondere mechanische) Federanordnung auf.

Gemäß einem Ausführungsbeispiel der Erfindung wird eine Relativbewegung zwischen dem zweiten Rollelement und dem Baugruppenrahmen in einer radialen Richtung des zweiten Rollelements durch Komprimieren oder Ausdehnen der Federanordnung bzw. von Federn der Federanordnung ermöglicht.

Gemäß einem Ausführungsbeispiel der Erfindung umfasst die (erste und zweite) Federanordnung zwei in Bezug auf den Baugruppenrahmen gegenüberliegende in radiale Richtung komprimierbare Federn. Mit anderen Worten können für jedes Segment zwei gegenüber angeordnete Federn vorgesehen sein.

Gemäß die Erfindung weist der Baugruppenrahmen eine Öffnung in radialer Richtung aufweist, wobei die Aufhängungsvorrichtung eine Hülse umfasst, die zumindest teilweise in der Öffnung aufgenommen ist und von der Öffnung in radialer Richtung geführt wird, wobei eine Feder der Federanordnung in einem von Hülse und Öffnung gebildeten Hohlraum aufgenommen ist. Die Feder kann derart angeordnet sein, dass sie in radialer Richtung komprimiert und expandiert (ausgedehnt) werden kann.

Gemäß einem Ausführungsbeispiel der Erfindung weist der Baugruppenrahmen zwei gegenüberliegend angeordnete Öffnungen zur Aufnahme einer Schraubenfeder und einer Hülse auf. Die Öffnungen können in radialer Richtung angeordnet sein.

Gemäß einem weiteren Ausführungsbeispiel der Erfindung weist die Aufhängungsvorrichtung eine Hülse und eine Feder auf, wobei die Hülse und die Feder derart einem ersten Segment und dem Baugruppenrahmen angeordnet sind, dass die Relativbewegung zwischen dem ersten Rollelement und dem zweiten Rollelement in der radialen Richtung des ersten Rollelements durch Komprimieren und Ausdehnen der Feder ermöglicht wird.

Eine derartige Andruckvorrichtung ermöglicht es, dass der Ablegedruck mit dem das Faserband beim Ablegen auf die Fläche gedrückt wird durch eine Federsteifigkeit der Feder definiert werden kann.

Die Andruckvorrichtung weist den Vorteil, dass sie einfach herzustellen ist, beispielsweise mit Hilfe eines einfachen Werkzeugs zum Montieren der Hülse.

Gemäß einem weiteren Ausführungsbeispiel der Erfindung ist die Fläche eine gekrümmte Fläche.

Gemäß einem weiteren Ausführungsbeispiel der Erfindung ist die Fläche eine doppelt gekrümmte Fläche.

Gemäß einem weiteren Ausführungsbeispiel der Erfindung ist die Feder zum Erzeugen einer Gegenkraft ausgeführt, wenn das erste Rollelement die Relativbewegung in der radialen Richtung des ersten Rollelements ausführt, wobei die Relativbewegung zum Ausgleichen einer Krümmung der Fläche geeignet ist.

Gemäß einem weiteren Ausführungsbeispiel der Erfindung weist die Andruckvorrichtung ferner einen Rahmen auf, wobei der Rahmen zum Anbringen an den Baugruppenrahmen ausgeführt ist.

Gemäß einem weiteren Ausführungsbeispiel der Erfindung weist die Andruckvorrichtung weiterhin einen Stift auf, wobei der Stift zum Anbringen des Rahmens an den Baugruppenrahmen ausgeführt ist.

Eine derartige Andruckvorrichtung ermöglicht es, dass der Stift beispielsweise in Form einer Schraube bzw. eines Bolzens zum Anbringen des Rahmens an den Baugruppenrahmen durch die Schraube ausgeführt ist.

Gemäß einem weiteren Ausführungsbeispiel der Erfindung weist die Aufhängungsvorrichtung ein Lager auf, wobei das Lager zum drehbaren Lagern des ersten Rollelements an dem Baugruppenrahmen ausgeführt ist. Das Lager ist ausgewählt aus der Gruppe bestehend aus Kugellager, Gleitlager und Wälzlager.

Gemäß einem weiteren Ausführungsbeispiel der Erfindung weist die Andruckvorrichtung weiterhin ein elastisches Material auf, und das Lager weist einen Gleitring auf, wobei das elastische Material zum Abdecken des Gleitrings ausgeführt ist. Der mit dem elastischen Material bedeckte Gleitring ist zum Bereitstellen einer Anpassungsfähigkeit der Andruckvorrichtung gegenüber Veränderungen der Krümmung der Fläche ausgeführt.

Der Baugruppenrahmen einer derartigen Andruckvorrichtung ist zum Bewegen entlang der Fläche, auf die das Faserband abgelegt wird, ausgeführt, während der Gleitring des Kugellagers auf Grund der Reibung mit der Fläche zum Drehen ausgeführt ist.

Gemäß einem weiteren Ausführungsbeispiel der Erfindung ist das Lager mit einer Lippendichtung zum Vermeiden von einer Kontamination der Fläche oder des Faserbandes mit Öl oder Schmierfett ausgeführt.

Gemäß einem weiteren Ausführungsbeispiel der Erfindung ist die Aufhängungsvorrichtung bzw. das Lager zum Ermöglichen der Relativbewegung des ersten Rollelements in einer Größenordnung von +/- 5% des Durchmessers des ersten Rollelements ausgeführt.

Gemäß einem weiteren Ausführungsbeispiel der Erfindung weist die Aufhängungsvorrichtung eine Hülse zum Führen der Federanordnung auf.

Gemäß einem weiteren Ausführungsbeispiel der Erfindung weisen die Hülse und der Baugruppenrahmen Anschlagflächen auf, um die Relativbewegung des ersten Rollelements in Bezug auf den Baugruppenrahmen zu begrenzen. Beispielsweise kann die Relativbewegung der Segmente auf 5% des Durchmessers der Rollen eingeschränkt werden.

Gemäß einem weiteren Ausführungsbeispiel der Erfindung ist ein Andruck- und Ablegesystem zum Ablegen eines Faserbandes auf eine Fläche mit einer Andruckvorrichtung nach einem der vorhergehenden Ausführungsbeispiele der Erfindung und einem Roboter angegeben. Die Andruckvorrichtung ist an einen Roboterarm des Roboters angebracht. Der Roboterarm ist zum Bewegen der Andruckvorrichtung entlang der Fläche ausgeführt.

Ein derartiges Andruck- und Ablegesystem ermöglicht es, dass der Roboterarm die Andruckvorrichtung ebenfalls in einer vertikalen Richtung senkrecht zur Fläche oder in einer Querrichtung zur Fläche bewegt.

Das Andruck- und Ablegesystem kann in Richtung der Fläche starr ausgeführt sein, wobei die Fläche in Richtung der Andruckvorrichtung bzw. relativ zur Andruckvorrichtung beweglich ausgeführt ist.

Gemäß einem weiteren Ausführungsbeispiel der Erfindung weist das Andruck- und Ablegesystem weiterhin eine Spule, eine Umlenkrolle und zwei Zugrollen auf, wobei die Spule zum Abspulen des auf der Spule aufgerollten Faserbandes ausgeführt ist. Die Umlenkrolle ist zum Umlenken des von der Spule abgespulten Faserbandes in Richtung der Fläche ausgeführt. Die Zugrollen sind zum Ziehen des umgelenkten Faserbandes in Richtung der Fläche ausgeführt und die Andruckrolle ist zum Ablegen des Faserbandes auf die Fläche ausgeführt. Das Faserband kann auch ohne Zugrollen, mit Hilfe der Klemmkraft der Andruckrolle auf die Fläche gefördert werden. In diesem Fall fungieren die Zugrollen als Führungsrollen.

Gemäß einem weiteren Ausführungsbeispiel der Erfindung ist das System dazu ausgeführt, das Faserband auf 420 °C zu erhitzen.

Gemäß einem weiteren Ausführungsbeispielder Erfindung ist die Verwendung einer Andruckvorrichtung nach einem der vorhergehenden Ausführungsbeispiele zum Ablegen eines Faserbandes auf ein Schalensegment eines Luftfahrzeugrumpfes zum Verstärken der Festigkeit des Luftfährzeugrumpfes angegeben.

Eine derartige Verwendung einer Andruckvorrichtung ermöglicht es, dass beispielsweise ein vorimprägniertes thermoplastisches Faserband zum Abdichten des Luftfahrzeugrumpfes zum Ablegen auf ein Schalensegment verwendet wird und damit ein Abdichten des Luftfahrzeugrumpfes ermöglicht wird.

Eine derartige Verwendung einer Andruckvorrichtung weist den Vorteil auf, dass beispielsweise die Schlagfestigkeit des Luftfahrzeugrumpfes erhöht wird.

Gemäß einem weiteren Ausführungsbeispiel der Erfindung ist ein Verfahren zum Ablegen eines Faserbandes auf eine Fläche angegeben, mit einem ersten Schritt zum Anbringen eines ersten Segments mit einem ersten Rollelement und eines Segments mit einem zweiten Rollelement an einen Baugruppenrahmen. In einem zweiten Schritt erfolgt das drehbare Lagern der Rollelemente an dem Baugruppenrahmen. In einem dritten Schritt erfolgt die Bewegung des ersten Rollelements in eine Richtung entlang der Fläche und in einem letzten Schritt erfolgt das Durchführen einer Relativbewegung zwischen dem ersten Rollelement und dem zweiten Rollelement in einer radialen Richtung des ersten Rollelements.

Gemäß einem weiteren Ausführungsbeispiel der Erfindung umfasst das Verfahren: Anbringen einer Federanordnung an dem ersten Segment und dem Baugruppenrahmen, derart dass eine Relativbewegung zwischen dem ersten Rollelement und dem zweiten Rollelement in der radialen Richtung des ersten Rollelements durch Komprimieren oder Ausdehnen der Feder(n) der Federanordnung ermöglicht wird.

Gemäß einem weiteren Ausführungsbeispiel der Erfindung umfasst das Verfahren: Erhitzen des mit einer Matrix vorimprägnierten Faserbandes auf eine Temperatur über 420 °C.

Gemäß einem weiteren Ausführungsbeispiel der Erfindung umfasst das Verfahren: Ablegen des Faserbandes auf ein Schalensegment eines Luftfahrzeugrumpfes zum Verstärken der Festigkeit des Luftfahrzeugrumpfes.

Die einzelnen Merkmale der verschiedenen Ausmhrungsbeispiele können auch untereinander kombiniert werden, wodurch sich zum Teil auch vorteilhafte Wirkungen einstellen können, die über die Summe der Einzelwirkungen hinausgehen, selbst wenn diese nicht ausdrücklich beschrieben sind.

Es ist insbesondere zu beachten, dass die hier und im Folgenden im Hinblick auf die Andruckvorrichtung beschriebenen Merkmale auch in dem Andruck- und Ablegesystem und in dem Verfahren implementierbar sind und umgekehrt.

Diese und andere Aspekte der Erfindung werden durch die Bezugnahme auf die hiernach beschriebenen beispielhaften Ausfühmngsformen erläutert und verdeutlicht.

### KURZE BESCHREIBUNG DER FIGUREN

Fig. 1 zeigt eine perspektivische Ansicht einer Andruckvorrichtung zum Ablegen eines Faserbandes auf eine Fläche gemäß einem Ausführungsbeispiel der Erfindung.
Fig. 2 zeigt eine schematische Längsschnittansicht der Andruckvorrichtung zum Ablegen eines Faserbandes der Fig. 1 gemäß einem Ausführungsbeispiel der Erfindung.
Fig. 3 zeigt eine schematische Querschnittansicht eines Segments der Andruckvorrichtung zum Ablegen eines Faserbandes auf eine Fläche der Fig. 2 gemäß einem Ausführungsbeispiel der Erfindung.
Fig. 4a zeigt ein Andruck- und Ablegesystem zum Ablegen eines Faserbandes auf eine Fläche gemäß einem Ausführungsbeispiel der Erfindung.
Fig. 4b zeigt das Andruck- und Ablegesystem zum Ablegen eines Faserbandes auf eine Fläche der Fig. 4a ohne einen Roboter gemäß einem weiteren Ausführungsbeispiel der Erfindung.
Fig. 5 zeigt die Verwendung einer Andruckvorrichtung zum Ablegen eines Faserbandes auf ein Schalensegment eines Luftfahrzeugrumpfes gemäß einem Ausführungsbeispiel der Erfindung.
Fig. 6 zeigt ein Flussdiagramm eines Verfahrens zum Ablegen eines Faserbandes auf eine Fläche gemäß einem Ausführungsbeispiel der Erfindung.

### DETAILLIERTE BESCHREIBUNG BEISPIELHAFTER

### AUSFÜHRUNGSBEISPIELE

Im Folgenden werden unter Bezugnahme auf die beigefügten Figuren Ausführungsbeispiele der Erfindung beschrieben.

Die Darstellungen in den Figuren sind schematisch und nicht maßstäblich. In den folgenden Figurenbeschreibungen werden für gleiche oder ähnliche Elemente die gleichen Bezugszeichen verwendet.

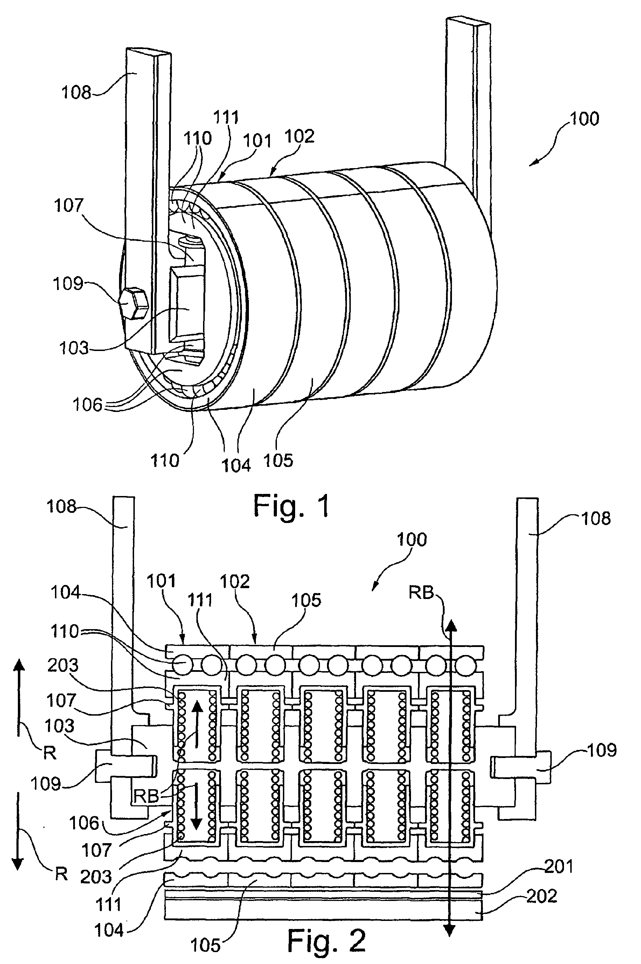

Fig. 1 zeigt eine perspektivische Ansicht einer Andruckvorrichtung 100 zum Ablegen eines Faserbandes auf eine Fläche mit einem ersten Segment 101 und zumindest einem zweiten Segment 102 zum Rollen entlang der Fläche sowie einen Baugruppenrahmen 103 zum Halten der Segmente 101, 102. Die Segmente 101, 102 sind nebeneinander angeordnet. Drei weitere Segmente sind neben dem zweiten Segment 102 in Reihe angeordnet und hier nicht näher bezeichnet, ebenso wie in der Fig. 2. Der Baugruppenrahmen 103 ist über eine Schraube 109 bzw. einen Stift an einem Rahmen 108 befestigt.

Das erste Segment 101 weist ein erstes Rollelement 104 auf sowie eine erste Aufhängungsvorrichtung 106 mit einer Hülse 107 und einem Lager 110, das einen Gleitring 111 aufweist.

Das zweite Segment 102 weist ein zweites Rollelement 105 und eine zweite Aufhängungsvorrichtung auf, die baugleich zur ersten Aufhängungsvorrichtung 106 ist.

Die Authängungsvorrichtung 106 ist zum Anbringen des ersten Segments 101 an dem Baugruppenrahmen 103 und zum drehbaren Lagern des ersten Rollelements 104 an dem Baugruppenrahmen 103 ausgeführt. Die Aufhängungsvorrichtung 106 ist zum Ermöglichen einer Relativbewegung zwischen dem ersten Rollelement 104 und dem zweiten Rollelement 105 in einer radialen Richtung des ersten Rollelements 104 ausgeführt.

Die Rollelement 104, 105 der Segmente 101, 102 können als Rollelemente 104, 105 mit einer Aussparung in der Mitte der Rollelemente oder als massive Rollelemente 104, 105 ohne Aussparung ausgeführt sein (nicht gezeigt in Fig. 1).

Die erste Aufhängungsvorrichtung 106 weist zwei Hülsen 107 auf, die durch zwei Öffnungen im Baugruppenrahmen 103 in radialer Richtung R geführt sind. Die Öffnungen und die Hülsen 107 können beispielsweise einen kreisförmigen Querschnitt aufweisen, wobei der Außendurchmesser der Hülsen 107 bis auf ein geringes Spaltmaß dem Durchmesser der Öffnungen entspricht.

Jeder der Hülsen 107 weist einen rohrförmigen Mantel und an einem dem Baugruppenrahmen abgewandten Ende einen Verschluss auf, so dass durch die Hülse und die Öffnung ein zylinderförmiger Hohlraum gebildet ist, in dem eine Schraubenfeder 203 aufgenommen ist. Für jede der Aufhängungsvorrichtungen 106 sind jeweils zwei Öffnungen mit jeweils zwei Hülsen 107 und jeweils zwei Federn 203 vorgesehen. Damit weist jede Federanordnung 203 jeweils zwei Federn auf.

Das Lager 110 weist an seiner Innenseite eine Öffnung auf, die ein weiteres Ende der Hülse 107 aufnimmt. Mit diesem Ende ist die Hülse 107 am Lager 110 befestigt.

Zur Begrenzung der Relativbewegung der Segmente 101, 102 gegenüber dem Baugruppenrahmen können an jeder Hülse 107 Anschlagflächen vorgesehen sein, die durch ringförmige Vorsprünge um den Mantel der Hülse 107 gebildet sind und die sich auf einer Außenoberfläche des Baugruppenrahmen 103 abstützen können.

Fig. 2 zeigt eine Längsschnittansicht der Andruckvorrichtung 100 der Fig. 1 mit einem Rahmen 108, an dem über ein Stift 109 ein Baugruppenrahmen 103 angebracht ist. Eine Aufhängungsvorrichtung 106 mit einer Hülse 107 und einer Feder 203 ist derart an dem ersten Segment 101 und dem Baugruppenrahmen 103 angeordnet, dass eine Relativbewegung RB zwischen dem ersten Rollelement 104 des ersten Segments 101 und dem zweiten Rollelement 105 des zweiten Segments 102 in der radialen Richtung R des ersten Rollelements 104 durch Komprimierung und Ausdehnung der Feder 203 ermöglicht wird.

Fig. 2 zeigt ferner ein Lager 110 mit einem Gleitring 111, an dem die Hülse 107 angebracht ist, wobei an der Hülse 107 die Feder 203 angeordnet ist, die die Relativbewegung RB zwischen dem ersten Rollelement 104 und dem zweiten Rollelement 105 ermöglicht.

Das Lager 110 weist eine längliche Öffnung auf, in der der Baugruppenrahmen 103 und die Aufhängungsvorrichtung 106 aufgenommen sind. Durch die zur radialen Richtung R parallelen Seiten der Öffnung wird der Baugruppenrahmen 103 in der Öffnung geführt.

Die Andruckvorrichtung 100 ist zum Ablegen des Faserbandes 201 auf eine Fläche 202 ausgeführt.

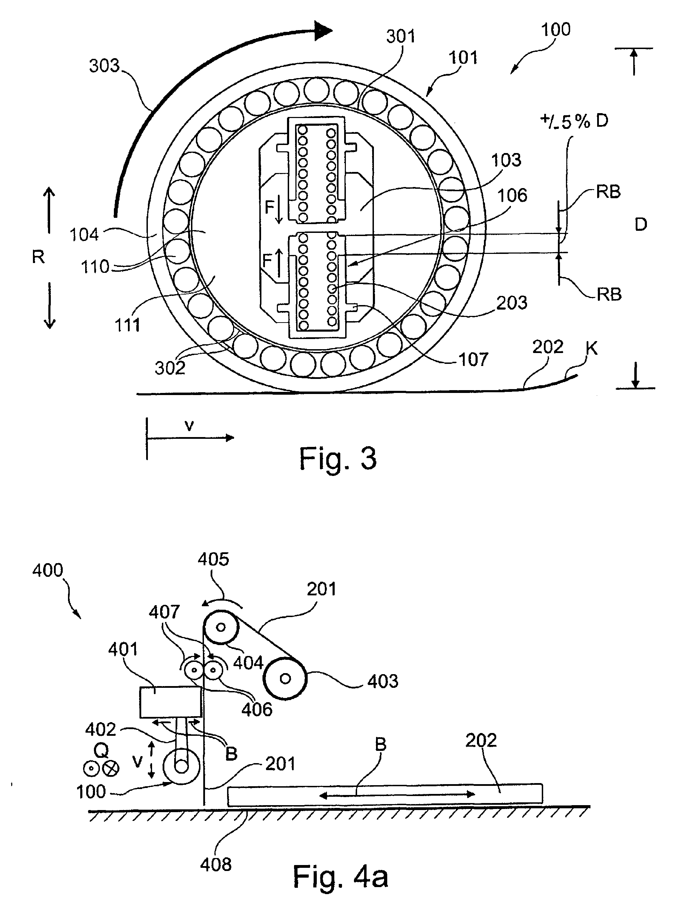

Fig. 3 zeigt eine Querschnittansicht der Andruckvorrichtung 100 der Fig. 2, die sich in eine Richtung 303 auf einer gekrümmten Fläche 202 mit einer Krümmung K dreht und somit mit einer Geschwindigkeit v in Richtung der Fläche 202 bewegt. Das erste Segment 101 weist ein erstes Rollelement 104 sowie ein Lager 110 auf, das an dem Rollelement 104 angeordnet ist, und einen Gleitring 111 aufweist. Der Gleitring 111 ist mit einem elastischen Material 301 abgedeckt, wobei der mit dem elastischen Material 301 bedeckte Gleitring 111 zum Bereitstellen einer Anpassungsfähigkeit bzw. einer Konturadaptivität der Andruckvorrichtung 100 gegenüber Veränderungen der Krümmung K der Fläche 202 ausgeführt ist. Das elastische Material kann an der Innenseite des Rollelements angeordnet sein und die Anpassungsfähigkeit der Andruckvorrichtung 100 gegenüber Veränderungen der Krümmung K der Fläche 202 gewährleisten (nicht gezeigt in Fig. 3).

Das Lager 110 ist mit einer Lippendichtung 102 zum Vermeiden von einer Kontamination der Fläche 202 oder des Faserbandes 201 mit Öl oder Schmierfett ausgeführt.

Die Aufhängungsvorrichtung 106 mit der Hülse 107 und der Feder 203 ermöglicht eine Relativbewegung RB des ersten Rollelements 104 in einer Größenordnung von +/- 5% des Durchmessers D des ersten Rollelements 104.

Die Hülse 107 und die Feder 203 sind derart an dem ersten Segment 101 und dem Baugruppenrahmen 103 angeordnet, dass die Relativbewegung RB zwischen dem ersten Rollelement 104 und dem zweiten Rollelement (nicht gezeigt) in der radialen Richtung R des ersten Rollelements 104 durch Komprimieren und Ausdehnen der Feder 203 ermöglicht wird.

Fig. 4a zeigt ein Andruck- und Ablegesystem 400 zum Ablegen eines Faserbandes 201 auf eine Fläche 202 mit einer Andruckvorrichtung 100 und einem Roboter 401, wobei die Andruckvorrichtung 100 an einen Roboterarm 402 des Roboters 401 angebracht ist.

Der Roboterarm 402 ist zum Bewegen der Andruckvorrichtung 100 in einer Richtung B entlang der Fläche 202 sowie einer Querrichtung Q zur Fläche 202 und einer vertikalen Richtung V zur Fläche 202 ausgeführt.

Die Fläche 202 kann sich in eine Richtung B auf einer Ablage 408 in Richtung der Andruckvorrichtung 100 bewegen, und somit die Ablage des Faserbandes 201 auf die Fläche mit Hilfe der Andruckvorrichtung 100 ermöglichen.

Das Faserband 201 ist auf einer Spule 403 aufgewickelt, und wird über eine Umlenkrolle 404, die sich in eine Richtung 405 dreht, in eine Richtung senkrecht zur Fläche 202 umgelenkt. Zwei Zugrollen 406, die sich entgegengesetzt in Richtungen 407 auf sich zu drehen ziehen das Faserband 201 anschließend weiter in Richtung der Fläche 202 und der Andruckvorrichtung 100, bis das Faserband 201 an die Andruckvorrichtung 100 gelangt. Anschließend wird das Faserband 201 durch eine Bewegung der Andruckvorrichtung 100 durch den Roboterarm 402 in Richtung B der Fläche 202 oder durch eine Bewegung der Fläche 202 in Richtung der Andruckvorrichtung 100 oder beidem auf die Fläche 202 abgelegt.

Fig. 4a zeigt den Zustand in dem das Faserband 201 noch nicht an der Andruckvorrichtung 100 angelegt und somit noch nicht auf der Fläche 202 abgelegt ist.

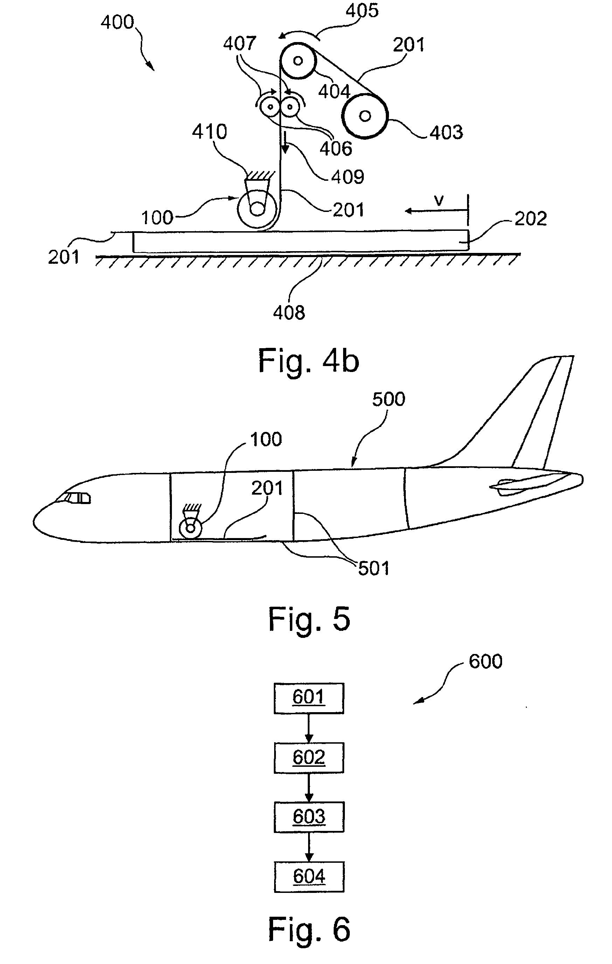

Fig. 4b zeigt das Andruck- und Ablegesystem 400 zum Ablegen eines Faserbandes 201 auf eine Fläche 202 der Fig. 4b ohne den Roboter 401 zum Anbringen der Andruckvorrichtung 100 wie in Fig. 4a gezeigt wird. Das Faserband 201 ist in Fig. 4b bereits in Richtung 409 der Andruckvorrichtung 100 gezogen worden, liegt an der Andruckvorrichtung 100 an und wird auf die Fläche 202 abgelegt. Dabei bewegt sich die Fläche 202 mit einer Geschwindigkeit v auf der Ablage 408 in Richtung der Andruckvorrichtung 100, die an einer Halterung 410 starr angebracht und somit in einer Längsrichtung der Fläche 202 (in der Richtung, in der sich die Fläche mit der Geschwindigkeit v bewegt) unbeweglich befestigt ist.

Fig. 5 zeigt die Verwendung einer Andruckvorrichtung 100 zum Ablegen eines Faserbandes 201 auf ein Schatensystem 501 eines Luftfahrzeugrumpfes 500 zum Verstärken der Festigkeit bzw. der Schlagfestigkeit des Luftfahrzeugrumpfes 500.

Fig. 6 zeigt ein Verfahren 600 zum Ablegen eines Faserbandes auf eine Fläche mit folgenden Schritten: In Schritt 601 erfolgt das Anbringen eines ersten Segments mit einem ersten Rollelement und eines zweiten Segments mit einem zweiten Rollelement an einen Baugruppenrahmen. In Schritt 602 erfolgt das drehbare Lagern der Rollelemente an dem Baugruppenrahmen. In Schritt 602 erfolgt die Bewegung des ersten Rollelements in einer Richtung entlang der Fläche. Im letzten Schritt 604 erfolgt das Durchführen einer Relativbewegung zwischen dem ersten Rollelement und dem zweiten Rollelement in einer radialen Richtung des ersten Rollelements.

Obwohl die Erfindung unter Bezugnahme auf die Ausführungsbeispiele beschrieben wurde, können verschiedene Änderungen und Modifikationen vorgenommen werden, ohne den Schutzbereich der Erfindung zu verlassen. Die Andruckvorrichtung zum Ablegen eines raserbandes auf eine Fläche kann sowohl für einfach gekrümmte Flächen als auch für doppelt gekrümmte Flächen in verschiedenen Industrien, wie der Transportmittelindustrie und der Bauindustrie sowie in Luftfahrzeugen, Schiffen, Verkehrstransportmitteln und der Raumfahrt verwendet werden.

Ergänzend ist darauf hinzuweisen, dass "umfassend" oder "aufweisend" keine anderen Elemente oder Schritte ausschließt und "eine" oder "ein" keine Vielzahl ausschließt. Insbesondere kann die Andruckvorrichtung beispielsweise also mehr als einen Baugruppenrahmen, mehr als ein Segment, mehr als einen Rahmen, mehr als einen Stift, mehr als ein elastisches Material, das erste Segment mehr als ein erstes Rolfelement, mehr als eine Aufhängungsvorrichtung, das zweite Segment mehr als ein zweites Rollelement, die Aufhängungsvorrichtung mehr als eine Hülse, mehr als eine Feder, mehr als ein Lager, das Lager mehr als einen Gleitring, mehr als eine Lippendichtung und das Andruck- und Ablegesystem mehr als eine Andruckvorrichtung, mehr als einen Roboter sowie der Roboter mehr als einen Roboterarm aufweisen. Die Andruckvorrichtung sowie das Andruck- und Ablegesystem können beispielsweise mehrere Faserbänder auf eine bzw. mehrere Flächen ablegen.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Andruckvorrichtung (100) zum Ablegen eines Faserbandes (201) auf eine Fläche (202), die Andruckvorrichtung (100) aufweisend:
ein erstes Segment (101) und zumindest ein zweites Segment (102), jeweils zum Rollen entlang der Fläche (202);
einen Baugruppenrahmen (103) zum Halten der Segmente (101, 102);
wobei das erste Segment (101) ein erstes Rollelement (104) aufweist und das zweite Segment ein zweites Rollelement (105) aufweist;
wobei das erste Segment eine Aufhängungsvorrichtung (106) aufweist, die zum Anbringen des ersten Segments (101) an dem Baugruppenrahmen (103) und zum drehbaren Lagern des ersten Rollelements (104) an dem Baugruppenrahmen (103) ausgeführt ist;
wobei die Aufhängungsvorrichtung (106) eine Federanordnung (203) aufweist, wodurch eine Relativbewegung (RB) zwischen dem ersten Rollelement (104) und dem zweiten Rollelement (105) in einer radialen Richtung (R) des ersten Rollelements (104) durch Komprimieren oder Ausdehnen der Federanordnung (203) ermöglicht wird;
wobei der Baugruppenrahmen (103) eine Öffnung in radialer Richtung aufweist;
wobei die Aufhängungsvorrichtung eine Hülse (107) umfasst, die zumindest teilweise in der Öffnung aufgenommen ist und von der Öffnung in radialer Richtung geführt wird;
wobei eine Feder der Federanordnung (203) in einem von Hülse und Öffnung gebildeten Hohlraum aufgenommen ist.

2. Andruckvorrichtung (100) nach Anspruch 1,
wobei die Aufhängungsvorrichtung (106) des ersten Segments (101) eine erste Aufhängungsvornchtung mit einer ersten Federanordnung (203) ist;
wobei eine Relativbewegung (RB) zwischen dem ersten Rollelement (104) und dem Baugruppenrahmen (103) in einer radialen Richtung (R) des ersten Rollelements (104) durch Komprimieren oder Ausdehnen der ersten Federanordnung (203) ermöglicht wird;
wobei das zweite Segment (102) eine zweite Aufhängungsvorrichtung aufweist, die zum Anbringen des zweiten Segments (102) an dem Baugruppenrahmen (103) und zum drehbaren Lagern des zweiten Rollelements (105) an dem Baugruppenrahmen (103) ausgeführt ist;
wobei die zweite Aufliängungsvorrichtung eine zweite Federanordnung (203) aufweist, wodurch eine Relativbewegung (RB) zwischen dem zweiten Rollelement (104) und dem Baugmppenrahmen (103) in einer radialen Richtung (R) des zweiten Rollelements (104) durch Komprimieren oder Ausdehnen der Federanordnung (203) ermöglicht wird.

3. Andruckvorrichtung (100) nach Anspruch 1 oder 2,
wobei die erste Federanordnung zwei in Bezug auf den Baugruppenrahmen (103) gegenüberliegende in radiale Richtung komprimierbare Federn (203) umfasst.

4. Andruckvorrichtung (100) nach einem der vorhergehenden Ansprüche,
wobei die Aufhängungsvorrichtung (106) ein Lager (110) aufweist;
wobei das Lager (110) zum drehbaren Lagern des ersten Rollelements (104) an dem Baugruppenrahmen (103) ausgeführt ist;
wobei das Lager (110) ausgewählt ist aus der Gruppe bestehend aus Kugellager, Gleitlager und Wälzlager.

5. Andruckvorrichtung (100) nach Anspruch 4, weiterhin aufweisend:
ein elastisches Material (301);
wobei das Lager (110) einen Gleitring (111) aufweist;
wobei das elastische Material (301) zum Abdecken des Gleitrings (111) ausgeführt ist;
wobei der mit dem elastischen Material (301) bedeckte Gleitring (111) zum Bereitstellen einer Anpassungsfähigkeit der Andruckvorrichtung (100) gegenüber Veränderungen der Krümmung (K) der Fläche (202) ausgeführt ist.

6. Andruckvorrichtung (100) nach einem der Ansprüche 4 oder 5,
wobei das Lager (110) mit einer Lippendichtung (302) zum Vermeiden von einer Kontamination der Fläche (202) oder des Faserbandes (201) mit Öl oder Schmierfett ausgeführt ist.

7. Andruckvorrichtung (100) nach einem der vorhergehenden Ansprüche;
wobei die Aufhängungsvorrichtung (106) zum Ermöglichen der Relativbewegung (RB) des ersten Rollelements (104) in einer Größenordnung von plus/minus fünf Prozent des Durchmessers (D) des ersten Rollelements (104) ausgeführt ist.

8. Andruckvorrichtung (100) nach einem der vorhergehenden Ansprüche;
wobei die Aufhängungsvorrichtung (106) eine Hülse (107) zum Führen der Federanordnung (203) aufweist,
wobei die Hülse (107) und der Baugruppenrahmen (103) Anschlagflächen aufweisen, um die Relativbewegung des ersten Rollelements (104) in Bezug auf den Baugruppenrahmen (103) zu begrenzen.

9. Andruck- und Ablegesystem (400) zum Ablegen eines Faserbandes (201) auf eine Fläche (202), das System (400) aufweisend:
eine Andruckvorrichtung (100) nach einem der Ansprüche 1 bis 9;
einen Roboter (401);
wobei die Andruckvorrichtung (100) an einen Roboterarm (402) des Roboters (401) angebracht ist;
wobei der Roboterarm (402) zum Bewegen der Andruckvorrichtung (100) entlang der Fläche (202) ausgeführt ist.

10. Andruck- und Ablegesystem (400) nach Anspruch 9,
wobei das System dazu ausgeführt ist, das Faserband auf 420 °C zu erhitzen.

11. Verwendung einer Andruckvorrichtung (100) nach einem der Ansprüche 1 bis 8 zum Ablegen eines Faserbandes (201) auf ein Schalensegment (501) eines Luftfahrzeugrumpfes (500) zum Verstärken der Festigkeit des Luftfahrzeugrumpfes (500).

12. Verfahren (600) zum Ablegen eines Faserbandes (201) auf eine Fläche (202), das Verfahren (600) aufweisend die Schritte:
Anbringen eines ersten Segments (101) mit einem ersten Rollelement (104) und eines zweiten Segments (102) mit einem zweiten Rollelement (105) an einen Baugruppenrahmen (103, 601);
Anbringen einer Federanordnung (203) an dem ersten Segment (101) und dem Baugruppenrahmen (103), derart dass eine Relativbewegung (RB) zwischen dem ersten Rollelement (104) und dem zweiten Rollelement (105) in der radialen Richtung (R) des ersten Rollelements (104) durch Komprimieren oder Ausdehnen der Federanordnung (203) ermöglicht wird;
Aufnehmen einer Feder der Federanordnung (203) in einem von einer Hülse und einer Öffnung gebildeten Hohlraum, wobei der Baugruppenrahmen (103) die Öffnung in radialer Richtung aufweist und wobei die Hülse (107) zumindest teilweise in der Öffnung aufgenommen ist und von der Öffnung in radialer Richtung geführt wird;
Drehbares Lagern der Rollelemente (104, 105) an dem Baugruppenrahmen (103, 602);
Bewegung des ersten Rollelements (104) in einer Richtung (B) entlang der Fläche (202, 603);
Durchführen der Relativbewegung (RB) zwischen dem ersten Rollelement (104) und dem zweiten Rollelement (105) in der radialen Richtung (R) des ersten Rollelements (104, 604).

13. Verfahren nach Anspruch 12, weiter umfassend den Schritt:
Erhitzen des mit einer Matrix vorimprägnierten Faserbandes (201) auf eine Temperatur über 420 °C.

14. Verfahren nach Anspruch 12 oder 13, weiter umfassend den Schritt:
Ablegen des Faserbandes (201) auf ein Schalensegment (501) eines Luftfahrzeugrumpfes (500) zum Verstärken der Festigkeit des Luftfahrzeugrumpfes.

## Claims

1. Pressing apparatus (100) for depositing a sliver (201) on a surface (202), wherein the pressing apparatus (100) comprises:
a first segment (101) and at least a second segment (102), each configured to roll along the surface (202);
an assembly frame (103) configured to hold the segments (101, 102);
wherein the first segment (101) comprises a first rolling element (104) and the second segment (102) comprises a second rolling element (105);
wherein the first segment (101) comprises a suspension apparatus (106) that is configured to attach the first segment (101) to the assembly frame (103) and to rotatably mount the first rolling element (104) on the assembly frame (103);
wherein the suspension apparatus (106) comprises a spring assembly (203) configured such that a relative movement (RB) between the first rolling element (104) and the second rolling element (105) is realized in a radial direction (R) of the first rolling element (104) due to a compression or an extension by the spring assembly (203);
wherein the suspension apparatus (106) comprises an opening in a radial direction (R);
wherein the suspension apparatus (106) comprises a sleeve (107) at least partially received in the opening and guided by the opening in the radial direction (R);
wherein a spring of the spring assembly (203) is accommodated in a hollow space formed by the sleeve (107) and the opening.

2. The pressing apparatus (100) of claim 1,
wherein the suspension apparatus (106) of the first segment (101) is a first suspension apparatus with a first spring assembly (203);
wherein a relative movement (RB) between the first rolling element (104) and the assembly frame (103) is realized in a radial direction (R) of the first rolling element (104) by compression or extension of the first spring assembly (203);
wherein the second segment (102) comprises a second suspension apparatus that is configured to attach the second segment (102) to the assembly frame (103) and further configured to rotatably mount the second rolling element (105) on the assembly frame (103);
wherein the second suspension apparatus comprises a second spring assembly (203) such that a relative movement (RB) between the second rolling element (105) and the assembly frame (103) is realized in a radial direction (R) of the second rolling element (105) by compression or extension of the spring assembly (203).

3. The pressing apparatus (100) of claim 1 or 2,
wherein the first spring assembly comprises two springs that lie opposite relative to the assembly frame (103) and are compressible in the radial direction.

4. The pressing apparatus (100) of one of the preceding claims,
wherein the suspension apparatus (106) comprises a bearing (110);
wherein the bearing (110) is configured to rotatably mount the first rolling element (104) on the assembly frame (103);
wherein the bearing (110) is selected from the group comprising ball bearings, slide bearings and roller bearings.

5. The pressing apparatus (100) of claim 4, furthermore comprising:
an elastic material (301);
wherein the bearing (110) comprises a bearing sliding ring (111);
wherein the elastic material (301) is configured to cover the bearing sliding ring (111);
wherein the bearing sliding ring (111) covered by the elastic material (301) is configured to provide an adaptability of the pressing apparatus (100) relative to changes in a curvature (K) of the surface (202).

6. The pressing apparatus (100) of claim 4 or 5,
wherein the bearing (110) is realized with a lip seal (302) that is configured to avoid a contamination of the surface (202) or the sliver (201) with oil or grease.

7. The pressing apparatus (100) of one of the preceding claims,
wherein the suspension apparatus (106) is configured to allow a relative movement (RB) of the first rolling element (104) in an order of approximately ± five percent of the diameter (D) of the first rolling element (104).

8. The pressing apparatus (100) of one of the preceding claims,
wherein the suspension apparatus (106) comprises a sleeve (107) for guiding the spring assembly (203);
wherein the sleeve (107) and the assembly frame (103) comprise stopping faces that are configured to limit the relative movement of the first rolling element (104) relative to the assembly frame (103).

9. Pressing and depositing system (400) for depositing a sliver (201) on a surface (202), wherein the system (400) comprises:
a pressing apparatus (100) according to one of the claims 1 to 9;
a robot (401);
wherein the pressing apparatus (100) is attached to a robotic arm (402) of the robot (401);
wherein the robotic arm (402) is configured to move the pressing apparatus (100) along the surface (202).

10. The pressing and depositing system (400) of claim 9,
wherein the system is configured to heating the sliver (201) to approximately 420°C.

11. Use of a pressing apparatus (100) according to one of the claims 1 to 8 for depositing a silver (201) on a shell segment (501) of an aircraft fuselage (500) in order to increase the strength of the aircraft fuselage (500).

12. Method (600) for depositing a sliver (201) on a surface (202), wherein the method (600) comprises the steps of:
attaching a first segment (101) with a first rolling element (104) and a second segment (102) with a second rolling element (105) to an assembly frame (103, 601);
attaching a spring assembly (203) to the first segment (101) and the assembly frame (103) in such a way that a relative movement (RB) between the first rolling element (104) and the second rolling element (105) is realized in a radial direction (R) of the first rolling element (104) by compression or extension of the spring assembly (203);
accommodating a spring of the spring assembly (203) in a hollow space formed by a sleeve and
an opening, wherein the assembly frame (103) comprises the opening in the radial direction, and
wherein the sleeve (107) is at least partially received in the opening and is guided in the radial direction by the opening;
rotatably mounting the rolling elements (104, 105) on the assembly frame (103, 602);
moving the first rolling element (104) in a direction (B) along the surface (202, 603); and
carrying out the relative movement (RB) between the first rolling element (104) and the second rolling element (105) in the radial direction (R) of the first rolling element (104, 604).

13. The method of claim 12, furthermore comprising the step of:
heating the sliver (201) that is pre-impregnated with a matrix to a temperature in excess of approximately 420°C.

14. The method of claim 12 or 13, furthermore comprising the step of:
depositing the sliver (201) on a shell segment (501) of an aircraft fuselage (500) in order to increase the strength or the aircraft fuselage.

## Revendications

1. Dispositif d'application par pression (100) pour déposer une bande de fibres (201) sur une surface (202), le dispositif d'application par pression (100) comprenant :
un premier segment (101) et au moins un deuxième segment (102), pour rouler chacun le long de la surface (202) ;
un châssis de sous-groupes (103) pour le maintien des segments (101, 102) ;
le premier segment (101) présentant un premier élément de rouleau (104) et le deuxième segment présentant un deuxième élément de rouleau (105) ;
le premier segment présentant un dispositif de suspension (106), réalisé pour le montage du premier segment (101) sur le châssis de sous-groupes (103) et pour le logement tournant du premier élément de rouleau (104) sur le châssis de sous-groupes (103) ;
le dispositif de suspension (106) présentant un agencement de ressorts (203), un mouvement relatif (RB) entre le premier élément de rouleau (104) et le deuxième élément de rouleau (105) dans une direction radiale (R) du premier élément de rouleau (104) étant permis par compression ou détente de l'agencement de ressorts (203) ;
le châssis de sous-groupes (103) présentant une ouverture dans la direction radiale ;
le dispositif de suspension comprenant un manchon (107), logé au moins en partie dans l'ouverture et guidé à partir de l'ouverture dans la direction radiale ;
un ressort de l'agencement de ressorts (103) étant logé dans un espace creux formé par le manchon et l'ouverture.

2. Dispositif d'application par pression (100) selon la revendication 1,
le dispositif de suspension (106) du premier segment (101) étant un premier dispositif de suspension avec un premier agencement de ressorts (203) ;
un mouvement relatif (RB) entre le premier élément de rouleau (104) et le châssis de sous-groupes (103) dans une direction radiale (R) du premier élément de rouleau (104) étant permis par compression ou détente du premier agencement de ressorts (203) ;
le deuxième segment (102) présentant un deuxième dispositif de suspension, réalisé pour le montage du deuxième segment (102) sur le châssis de sous-groupes (103) et pour le logement tournant du deuxième élément de rouleau (105) sur le châssis de sous-groupes (103) ;
le deuxième dispositif de suspension présentant un deuxième agencement de ressorts (203), un mouvement relatif (RB) entre le deuxième élément de rouleau (104) et le châssis de sous-groupes (103) dans une direction radiale (R) du deuxième élément de rouleau (104) étant permis de ce fait par compression ou détente de l'agencement de ressorts (203).

3. Dispositif d'application par pression (100) selon l'une des revendications 1 et 2,
le premier agencement de ressorts comportant deux ressorts (203) compressibles dans la direction radiale, en vis-à-vis du châssis de sous-groupes (103).

4. Dispositif d'application par pression (100) selon l'une des revendications précédentes,
le dispositif de suspension (106) présentant un palier (110) ;
le palier (110) étant réalisé pour le logement tournant du premier élément de rouleau (104) sur le châssis de sous-groupes (103) ;
le palier (110) étant sélectionné parmi le groupe constitué d'un roulement à billes, d'un palier lisse et d'un palier à roulement.

5. Dispositif d'application par pression (100) selon la revendication 4, comprenant en outre :
un matériau élastique (301) ;
le palier (110) présentant un anneau de glissement (111) ;
le matériau élastique (301) étant réalisé pour recouvrir l'anneau de glissement (111) ;
l'anneau de glissement (111), recouvert du matériau élastique (301), étant réalisé pour fournir une adaptabilité du dispositif d'application par pression (100) par rapport à des modifications de la courbure (K) de la surface (202).

6. Dispositif d'application par pression (100) selon l'une des revendications 4 et 5,
le palier (110) étant réalisé avec un joint à lèvres (302) pour éviter une contamination de la surface (202) ou de la bande de fibres (201) par de l'huile ou de la graisse.

7. Dispositif d'application par pression (100) selon l'une des revendications précédentes ;
le dispositif de suspension (106) étant réalisé pour permettre le mouvement relatif (RB) du premier élément de rouleau (104) dans un ordre de grandeur de plus/moins cinq pour cent du diamètre (D) du premier élément de rouleau (104).

8. Dispositif d'application par pression (100) selon l'une des revendications précédentes ;
le dispositif de suspension (106) présentant un manchon (107) pour le guidage de l'agencement de ressorts (203) ;
le manchon (107) et le châssis de sous-groupes (103) présentant des surfaces de butée, pour limiter le mouvement relatif du premier élément de rouleau (104) par rapport au châssis de sous-groupes (103).

9. Système d'application par pression et de dépose (400) pour déposer une bande de fibres (201) sur une surface (202), le système (400) comprenant :
un dispositif d'application par pression (100) selon l'une des revendications 1 à 9 ;
un robot (401);
le dispositif d'application par pression (100) étant monté sur un bras (402) du robot (401) ;
le bras de robot (402) étant réalisé pour déplacer le dispositif d'application par pression (100) le long de la surface (202).

10. Système d'application par pression et de dépose (400) selon la revendication 9 ;
le système étant réalisé pour chauffer la bande de fibres à 420°C.

11. Utilisation d'un dispositif d'application par pression (100) selon l'une des revendications 1 à 8 pour déposer une bande de fibres (201) sur un segment de coque (501) d'un fuselage d'avion (500) afin de renforcer la résistance du fuselage (500).

12. Procédé (600) pour déposer une bande de fibres (201) sur une surface (202), le procédé (600) comprenant les étapes suivantes :
montage d'un premier segment (101) avec un premier élément de rouleau (104) et d'un deuxième segment (102) avec un deuxième élément de rouleau (105) sur un châssis de sous-groupes (103, 601) ;
montage d'un agencement de ressorts (203) sur le premier segment (101) et le châssis de sous-groupes (103), de telle sorte qu'un mouvement relatif (RB) entre le premier élément de rouleau (104) et le deuxième élément de rouleau (105) dans la direction radiale (R) du premier élément de rouleau est permis par compression ou détente de l'agencement de ressorts (203) ;
logement d'un ressort de l'agencement de ressorts (203) dans un espace creux formé par un manchon et une ouverture, le châssis de sous-groupes (103) présentant l'ouverture dans la direction radiale et le manchon (107) étant logé au moins en partie dans l'ouverture et étant guidé à partir de l'ouverture dans la direction radiale ;
logement tournant des éléments de rouleaux (104, 105) sur le châssis de sous-groupes (103, 602) ;
déplacement du premier élément de rouleau (104) dans une direction (B) le long de la surface (202, 603) ;
mise en oeuvre du mouvement relatif (RB) entre le premier élément de rouleau (104) et le deuxième élément de rouleau (105) dans la direction radiale (R) du premier élément de rouleau (104, 604).

13. Procédé selon la revendication 12, comprenant en outre l'étape suivante :
chauffage de la bande de fibres (201), pré-imprégnée par une matrice, à une température de plus de 420°C.

14. Procédé selon l'une des revendications 12 et 13, comprenant en outre l'étape suivante :
dépose de la bande de fibres (201) sur un segment de coque (501) d'un fuselage d'avion (500) afin de renforcer la résistance du fuselage.
